# EUROPEAN PATENT SPECIFICATION

(11) **EP 1 292 398 B1**
(45) Date of publication and mention of the grant of the patent: **09.08.2006**
(21) Application number: 00941554.8
(22) Date of filing: 19.06.2000
(51) Int. Cl.: B05C 11/08, B05C 11/10, G01F 3/00, H01L 21/00

(54) **PROCESS AND SYSTEM FOR DETERMINING ACCEPTABILITY OF A FLUID DISPENSE**
VERFAHREN UND SYSTEM ZUR BESTIMMUNG DER ANNEHMBARKEIT EINER FLUIDABGABE
PROCEDE ET SYSTEME PERMETTANT DE DETERMINER L'ACCEPTABILITE D'UNE DISTRIBUTION DE FLUIDE

(43) Date of publication of application: 19.03.2003
(73) Proprietor: ENTEGRIS, INC., Chaska, MN 55318 (US)
(72) Inventor: PILLION, John, E., Brookline, NH 03033 (US); MCLOUGHLIN, Robert, F., Pelham, NH 03076 (US); SHYU, Jieh-Hwa, Andover, MA 01810 (US)
(74) Representative: Wenning, Ekkehard
(86) International application number: PCT/US2000/016843
(87) International publication number: WO 2001/097983

(56) References cited:
- PATENT ABSTRACTS OF JAPAN vol. 2000, no. 05, 14 September 2000 (2000-09-14) & JP 2000 042472 A (MATSUSHITA ELECTRONICS INDUSTRY CORP), 15 February 2000 (2000-02-15)
- PATENT ABSTRACTS OF JAPAN vol. 1995, no. 02, 31 March 1995 (1995-03-31) & JP 06 304518 A (SANYO ELECTRIC CO LTD), 1 November 1994 (1994-11-01)
- PATENT ABSTRACTS OF JAPAN vol. 013, no. 201 (E-757), 12 May 1989 (1989-05-12) & JP 01 021924 A (OKI ELECTRIC IND CO LTD), 25 January 1989 (1989-01-25)
- PATENT ABSTRACTS OF JAPAN vol. 016, no. 447 (E-1266), 17 September 1992 (1992-09-17) & JP 04 158510 A (NEC KYUSHU LTD), 1 June 1992 (1992-06-01)

## Description

### BACKGROUND OF THE INVENTION

### 1. Field of Invention

This invention relates to a method and apparatus for monitoring the integrity and timing of a fluid dispense. More particularly, the present invention relates to a method and apparatus for monitoring the integrity of a fluid dispense in real time.

### 2. Description of the Prior Art

A variety of industries require the delivery of precise volumes of a liquid at a consistent rate for highly repeatable periods of time. Furthermore, at the end of a delivery, subsequent processing will occur whose timing with respect to the delivery is crucial for process consistency and product uniformity. For example, precise volumes of a photoresist composition are delivered to a silicon wafer substrate in order to form a photoresist layer of uniform thickness onto the wafer. The wafer is spun at high speeds following the liquid delivery to evenly distribute the liquid on the wafer. The requirement for precise volumes, duration of dispense, and rate of delivery must be affected by an apparatus which is delivering the same volumes of liquid repeatedly at a consistent delivery rate for a highly repeatable duration over long periods of time.

As the semiconductor industry expects to utilize submicron technology, photo resists and low dielectric liquid compositions are becoming increasingly important for improving the performance of microprocessor and memory storage devices. To reduce manufacturing costs and reduce photoresist waste, lower dispense amounts of liquid photoresist and lower viscosity of liquid will be dispensed. Coatings on the wafer of these fluids require a high degree of uniformity in the thickness across the wafer and also the thickness from wafer to wafer. In order to attain the required uniformity and high manufacturing yield of films formed from these fluids, the fluid dynamics and timing of the liquid dispensed onto the wafer are critical. For example, broken streams of liquid impinging on the wafer, caused by drops or air bubbles in the dispense nozzle or tubing, are common causes of wafer defects which effect the uniformity of the film formed from the liquid. Increase defects lead to undesirable increases in production costs.

Fluids dispensed onto a wafer are made into a uniform film on the wafer by spinning the wafer at low speeds as the fluid is dispensed and then increasing the spinning speed, a step called spin up, to a final spin speed to uniformly spread the liquid across the wafer and to cause evaporation of the photoresist or low K dielectric solvent. The time during which the wafer is at its final spin speed is crucial to forming reproducibly thick and uniform coatings. Knowing the time between the end of a fluid dispense, when the liquid leaves the nozzle, and the time to final spin up is important for controlling the time the wafer is spun at the high spin speed and thus effects coating uniformity. The importance of various variables on coating uniformity is described by Daughton and Givens in *J*. *Electrochem. Soc*., (**1992**), vol. 129, p 173.

It has been proposed in PCT application number 98/00736 to provide and electronic rain gauge. A container is provided for collecting rainwater and converting the collected water into drops of defined volume through an orifice. The volume of rain is determined by counting the drops of liquid from the collector. This is accomplished by an optical emitter and optical receiver pair such that when the liquid drop passes between the emitter and receiver a voltage change or pulse is produced. By counting the number of voltage pulses and multiplying by the volume of a drop, the total amount of precipitation can be determined. No means is provided for monitoring the shape of the drop, its time leaving the apparatus, nor are means provided for detecting irregularities, the shape of the drop, or integrating the output signal from the emitter sensor pair as an input signal into a wafer spin coater or to the fluid dispense pump. In contrast, when monitoring a liquid dispense onto a silicon wafer, it is necessary to provide a means for monitoring the dispense in a manner that is capable of determining that the dispense is applied to each wafer in a consistent manner including the time of the dispense, shape of the dispense fluid, as well as determining the dispense volume. This requirement renders it necessary to monitor the shape and timing of the fluid dispense so that the rate of fluid application to the substrate from initial contact, intermediary contact and final contact between the fluid and substrates can be essentially duplicated over an extended period of time.

Accordingly, it would be desirable to provide a method and apparatus for monitoring the delivery of precise volumes of liquid with repeatable rates, fluid dynamics, volumes, and intervals of delivery. In addition, it would be desirable to provide such a method and apparatus which is capable of monitoring the delivery of precise volumes of liquid at repeatable rates over extended times, in a production line on a real time basis and using that information for process control.

JP-A 2000 042472 discloses a process and a system according to the pre-characterizing parts of claims 1 or 10.

JP-A 06 304518 and JP-A 01 021924 disclose the use of a dispensing control when coating a wafer.

### SUMMARY OF THE INVENTION

The above object is achieved by a process and by a system according to claims 1 and 10. The dependent claims are directed to further advantageous aspects of the invention.

In accordance with this invention, a time dependent profile of the dynamics of a liquid being dispensed from a nozzle is generated and analyzed. The profile thus generated then is compared to a standard profile that correlates in time, volume, and profile to a satisfactory liquid dispense. When the profile which is generated is deemed to be satisfactory in volume, timing, and shape, further processing of the liquid dispensed onto a substrate such as a silicon wafer is continued to effect further treatment of the liquid coated substrate. A light generator and a light detector are mounted below the nozzle from which the liquid is dispensed and the light generator and light detector are positioned on opposite sides of the path of liquid dispense flow. It is to be understood that other forms of energy from a generator, including but not limited to thermal, acoustic, or other types of electromagnetic energy can also be used in conjunction with a suitable detector. Thermal energy emitted from the sample itself can also be considered as a source of energy for a suitable detector. While light energy will be used as an example for description of this invention it is understood that these other types of energy and sensors could be used interchangeably.

During the dispensing process, the liquid stream will absorb or scatter some of the light from the light generator while the light transmitted from or scattered through the liquid is collected by the detector. The amount of light transmitted from the stream, whether it be absorbed or scattered, depends upon the diameter and the continuity of a given liquid stream emanating from the fluid dispense nozzle. As the rate the liquid is dispensed changes or stops, the diameter of the liquid stream reduces and breaks and the amount of light that reaches the detector is increased. By recording the amount of light collected over the time and converting that measurement to a suitable electrical signal, the time dependent profile, the fluid dynamics, of the dispense is obtained. This signal is then compared to a previously generated standard signal for a satisfactory liquid dispense to determine the acceptability of the dispense for its intended purpose. Alternatively, the signal obtained from the sensor can be used to define the timing of the dispense and end of dispense, and be used to start subsequent fluid processing steps such as spin-up or the application of a reduced pressure to the chamber.

In accordance with this invention, a process and system are provided for monitoring the light or energy transmission characteristics of a fluid dispense and correlating the monitored characteristics with a previously generated standard dispense to determine whether the fluid dispense is satisfactory for a particular purpose such as for a coating on a substrate. Also provided by this system is a means to determine the time at which the last fluid has left the dispense nozzle and to use the signal provided to initiate subsequent processing steps. A fluid is dispensed from a nozzle and is passed through at least one detector set, each comprising an energy emitter and an energy detector. As an example, the photons from an emitter pass through the fluid dispense and the photons transmitted through the fluid dispense are detected by the detector. A graph correlating degree of photon transmission over time then is compared to the standard graph to determine whether the dispense is satisfactory. The entire volume of dispense is exposed to the emitted photons so that the graph characterizes the entire dispense. When the dispense is deemed satisfactory, the coating process or the like in which the dispense is used, such as spin-up, is allowed to continue. When the dispense is deemed unsatisfactory, the object of the dispense is removed from further processing. For example, when coating a silicon wafer with a photoresist or low K dielectric or other material, the wafer coated with an unsatisfactory dispense is removed from further processing and the dispense fluid is removed there from such as by solvent extraction. In this example, substantial economic savings are realized by permitting recovery of acceptable untreated wafers that would become unacceptable if processed further such as when unsatisfactory photo-processing of the coated wafer is effected.

An alternative embodiment of this invention would measure the energy reflected or scattered from the substrate through at least one detector set, each comprising an energy emitter and an energy detector. The energy from the emitter strikes the fluid dispensed onto the substrate and the energy reflected from the fluid dispensed on the substrate is detected by the detector. A graph correlating degree of energy scattering over time then is compared to the standard graph to determine whether the dispense is satisfactory. The wafer is exposed to the emitted energy so that the graph of the scattered or reflected energy characterizes the entire dispense onto the wafer.

### BRIEF DESCRIPTION OF THE DRAWINGS

Figure 1 is a schematic view illustrating the apparatus of this invention.
Figure 2 illustrates a satisfactory dispense measured by the apparatus of this invention.
Figure 3 illustrates an unsatisfactory dispense measured by the apparatus of this invention.
Figure 4a is a diagram of the signal output produced by the apparatus of this invention which is representative of an unsatisfactory dispense identified in accordance with this invention.
Figure 4b is a diagram of the signal output produced by the apparatus of this invention which is representative of a satisfactory dispense identified in accordance with this invention.
Figure 5 is a circuit diagram for converting detected light transmitted through a dispense to a real time graph of the dispense light transmitting characteristics.
Figure 6 show an example of a suitable dispense, for duration of 0.25 to 3 seconds, as measured by the apparatus of this invention.
Figure 7 is an example of an unsatisfactory dispense as measured by the apparatus of this invention.
Figure 8 is a plot to determine the sensitivity of the apparatus of this invention to distinguish between dispenses of different duration.

### DESCRIPTION OF SPECIFIC EMBODIMENTS

A satisfactory fluid dispense is one which is formed from a single discrete volume of fluid rather than a plurality of discrete volumes of fluid. When a plurality of discrete fluid volumes are dispensed, the resultant coating on the substrate is characterized by a more variable thickness or striations as compared to the uniform coating generated with a single discrete fluid volume. Accordingly, a signal response generated by a single discrete volume of fluid passing through the sensor device is characterized by a smooth curve between the initial point of measurement where no fluid is interposed between the photon emitter and the photon detector and the final point of measurement where no fluid is interposed between the photon emitter and the photon detector. In contrast, a curve generated by a plurality of discrete fluid volumes is characterized by at least one peak or depression for the period of time that little or no fluid is present between discrete fluid volumes. A peak is obtained when energy transmission is directly measured while a depression is obtained when the inverse of photon transmission is measured.

One or a plurality of energy detectors can be utilized. When a plurality of detector sets are employed, they are positioned spaced apart from each other along the travel path of the fluid dispense. It is possible to use two or three detector sets in order to provide a means for verifying an initial measurement. Alternatively, detector and emitter sets can be positioned around the fluid dispense nozzle and angled such that the detector measures energy reflected or scattered from the dispense volume or from the substrate coated with a portion of the fluid.

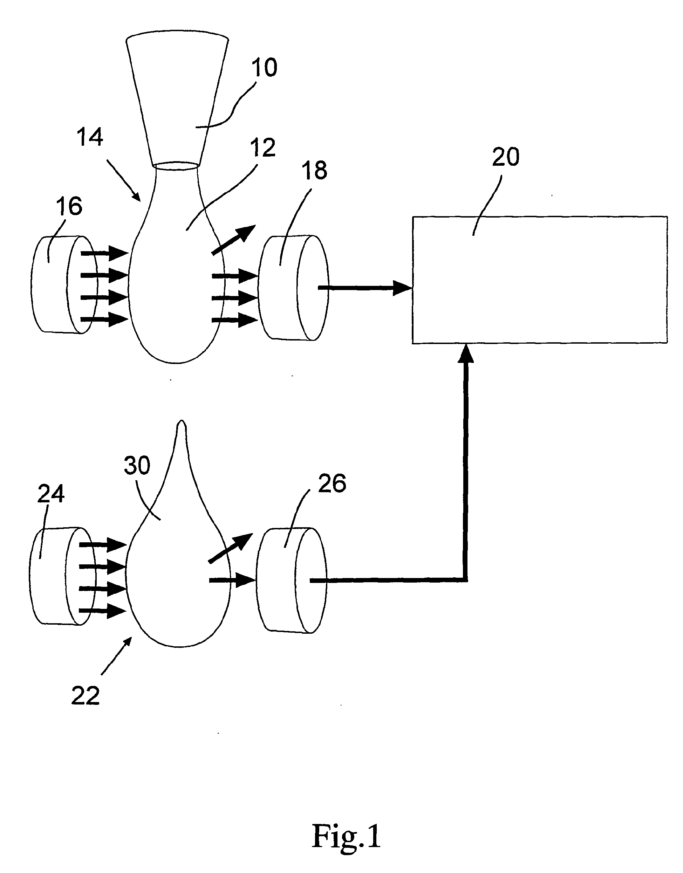

Referring to Figure 1, the system of this invention includes a nozzle 10 connected to a container (not shown) for a fluid to be dispensed from the nozzle by any conventional means such as by gravity, applying pressure to the fluid, pumping the fluid or the like with suitable conventional valving. The dispensed fluid 12 is passed, such as by gravity between a first detector set 14 which comprises an energy emitter such as an infrared or visible light emitting diode or an acoustic wave generator, and an energy detector 18 such as a photo-transistor, photo-resistor, thermopile, charge coupling device, or microphone. The detector 18 is electrically connected to a conventional signal processor 20 which is capable of generating a graph of energy transmission or energy absorbed by the liquid dispensed over a period of time. A second emitter and detector set 22 that comprises of an energy emitter 24 and energy detector 26 is positioned downstream of the first detector set 14. The energy detector 26 is electrically connected to the conventional signal processor 20 which is capable of generating a second graph of photon transmission or photon absorbance by the dispensed fluid 30 over time.

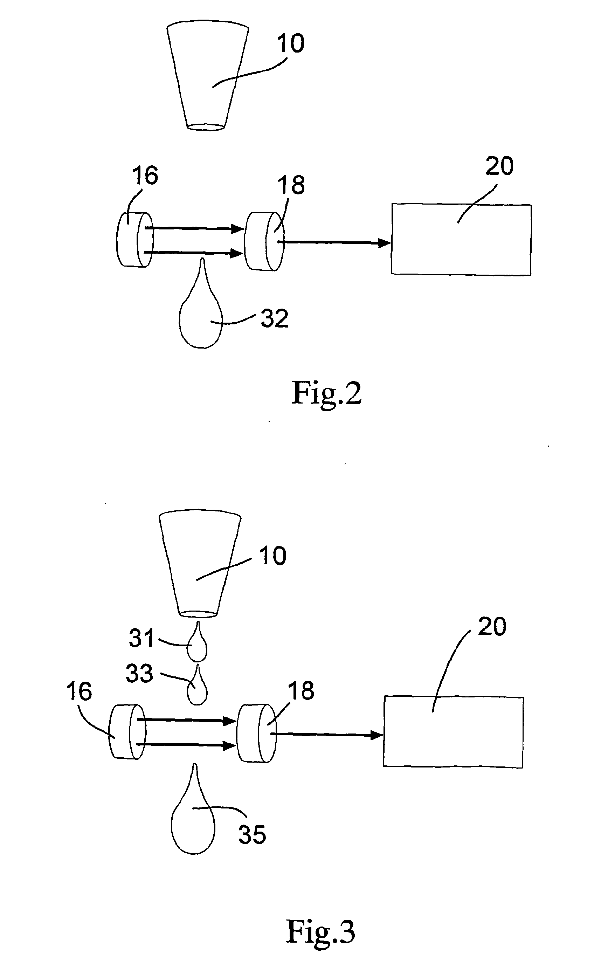

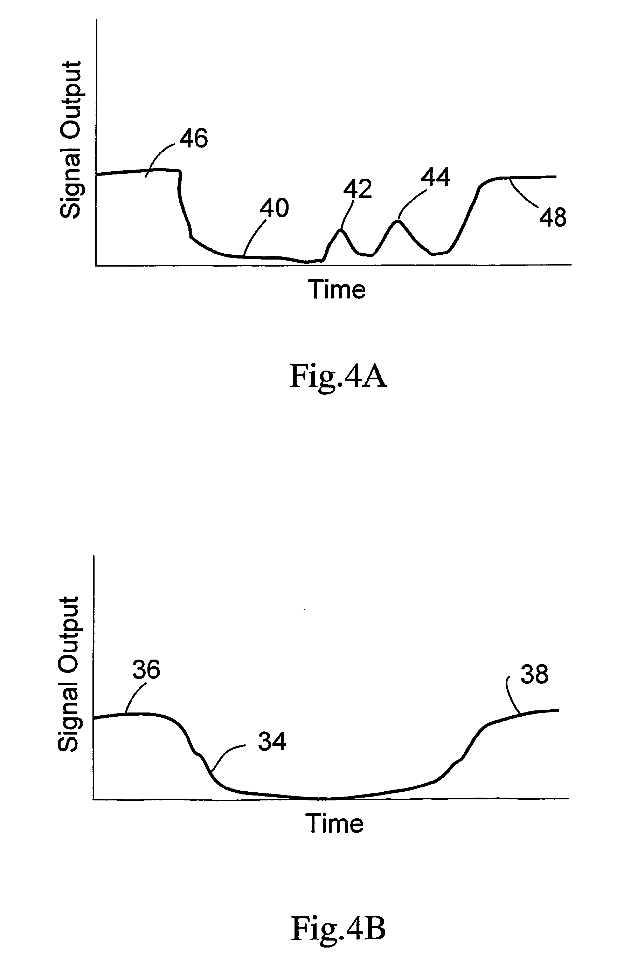

Referring to Figure 2, a satisfactory dispense is illustrated which comprises a single discrete volume 32 passing between photon emitter 16 and photon detector 18. This satisfactory dispense causes signal processor 20 to generate a curve 34 illustrated in Figure 4b. The curve 34 is free of spikes or depressions between the initial measurement 36 by detector 18 where no dispense is positioned between emitter 16 and detector 18 and the final measurement 38 by detector 18 where no dispense is positioned between photon emitter 16 and detector 18.

Referring to Figure 3, an unsatisfactory dispense is illustrated which comprises a plurality of discrete volumes 31, 33, and 35 passing between emitter 16 and detector 18. This unsatisfactory dispense causes signal processor 20 to generate a curve 40 illustrated in Figure 4a. The curve 40 includes spikes 42 and 44 (or depressions) between the initial measurement 46 by detector 18 where no dispense is positioned between emitter 16 and detector 18 and the final measurement 48 by detector 18 where no dispense is positioned between emitter 16 and detector 18. The spikes 42 and 44 comprise measurements when discrete volumes 33 and 31 respectively pass between emitter 16 and detector 18.

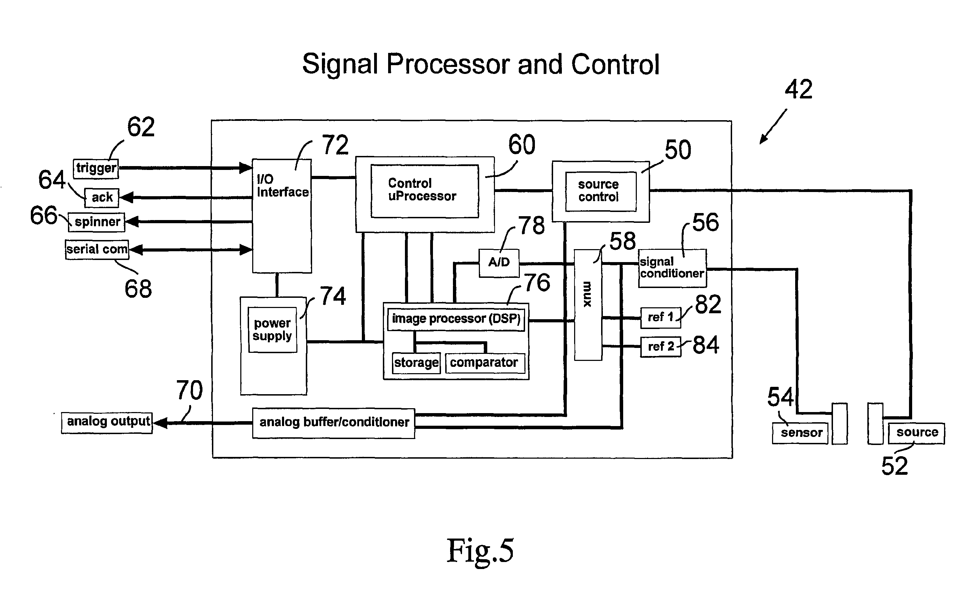

Referring to Figure 5 a schematic diagram of a processor capable of detecting the signal from the sensor, processing the signal into a suitable form, comparing the signal to a standard dispense, and signaling process equipment to take action based upon the results of the comparison, is illustrated.

### Example 1

A light emitter and light detector pair for sensing fluid dispense was constructed. An emitter detector pair, Tandy part number 276-142, was connected with 468 ohm resistors attached to the emitter and sensor leads. The emitter's peak wavelength was 915 nm. The emitter and sensor were cut and separated by 0.8 cm and mounted on a breadboard. The device was 2"X 2" in size. The liquid to be monitored was dispensed from a Millipore's Intelligen™ pump. The liquid contained photoresist dissolved in an ethyl lactate based solvent. The resist was dispensed by the pump through the sensor and emitter pair, mounted on the breadboard, and was collected in a 50 ml flask on an electronic scale. Mass measurements for the dispensed liquid were made after each dispense by mass difference to the previous dispense. The 0-5 volt output from the sensor was measured by a Kipp and Zonen strip chart recorder with the chart speed set for 20 mm/sec.

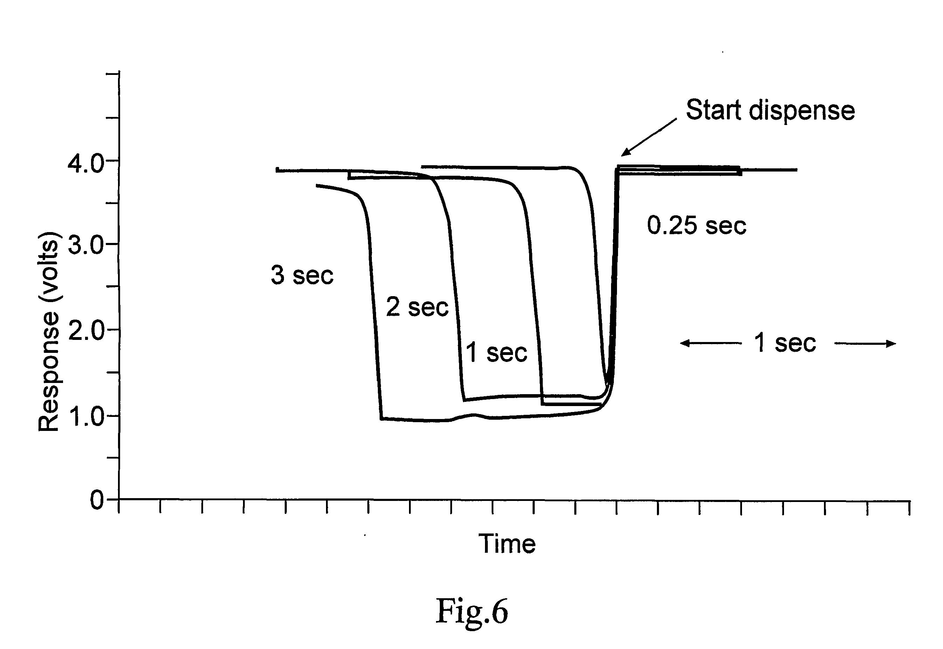

Figure 6 illustrates a desirable dispense of the photoresist measured by the apparatus described in this invention. The sensor response shows dispenses which range in duration from 0.25 to 3 seconds.

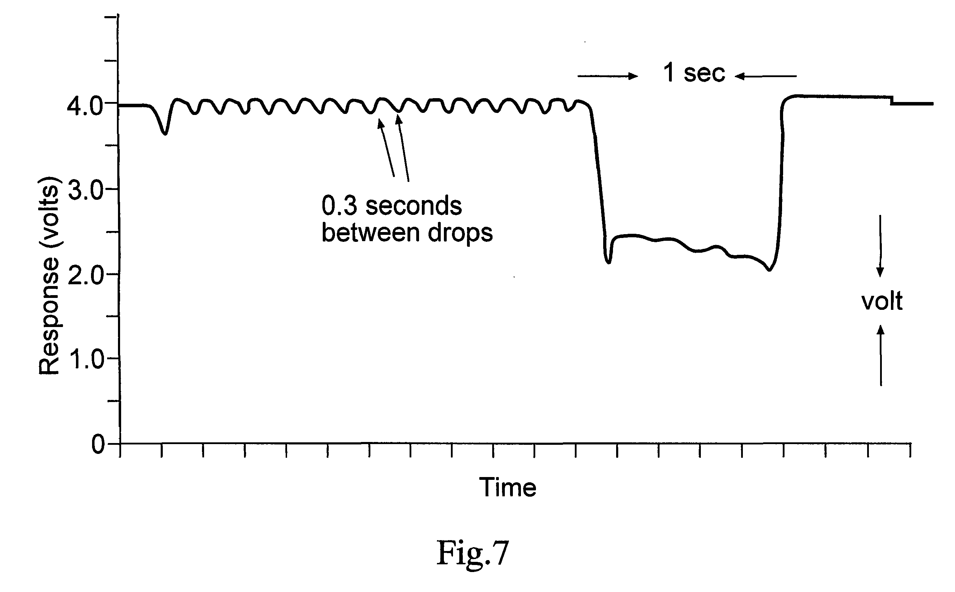

Figure 7 illustrates an undesirable dispense containing an irregular stream of fluid followed by plurality of drops characteristic of an undesirable dispense. Comparison of Figures 6 and 7 provide means for determining that the dispense illustrated in Figure 7 is unacceptable in terms of its shape and timing compared to those in Figure 6.

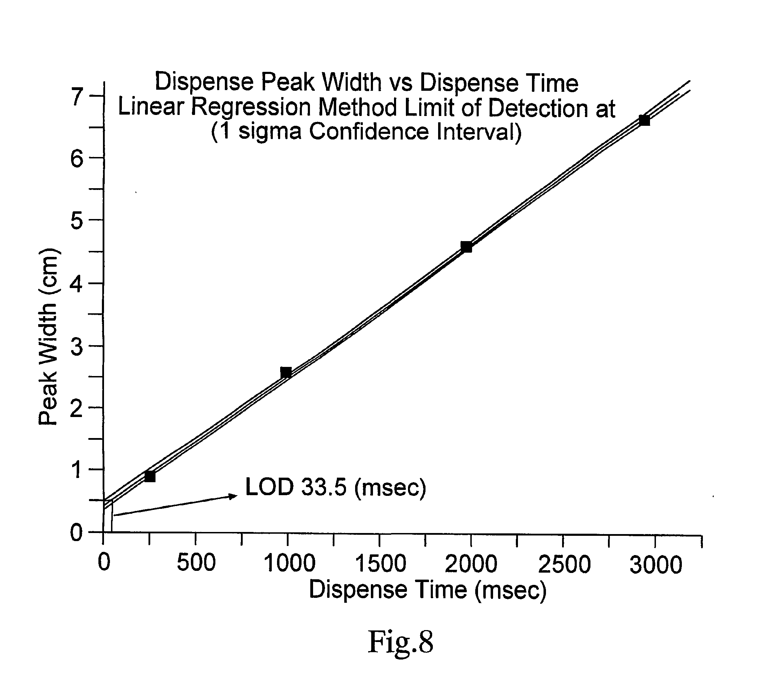

Figure 8 is a graph of different dispenses shown in Figure 6 plotted against the time for the dispense. A least squares regression of this data illustrates that at the 1 sigma confidence interval, the ability of the apparatus of this invention in Example 1 is able to distinguish between the duration of different dispenses to within 33 milliseconds.

It is to be understood that these are examples of the apparatus of the invention described. Suitable modifications to the device, including but not limited to high-speed timing equipment and other sensors would be obvious to those skilled in the art.

## Claims

1. The process for determining the acceptability of a fluid dispense which comprises:
providing a dispenser (10) for dispensing a volume of fluid comprising said fluid dispense from a container containing said fluid and dispensing the discrete fluid volume from the container through the dispenser (10),
illuminating said volume of fluid prior to said volume of fluid contacting a substrate with energy from an emitter (16),
detecting energy transmitted from said volume of fluid,
**characterized by**
identifying a shape of said fluid dispense, and
comparing said shape with a previously identified standard shape to determine acceptability of said fluid dispense. ,

2. The process of claim 1 wherein the detecting of energy transmitted from said volume of fluid is used to determine the time at which fluid flow from the dispenser (10) started and when it stopped.

3. The process of claim 1 wherein said steps of illuminating and detecting are conducted at least twice. ,

4. The process of claim 1 wherein said steps of illuminating and detecting are conducted by measuring the reflected energy from the surface onto which said volume of fluid is dispensed.

5. The process of claim 1 wherein the one or more energy sources are selected from the group consisting of thermal, acoustic and electromagnetic energy.

6. The process of claim 1 wherein the one or more energy sources is light.

7. The process of claim 1 wherein the receipt of a signal from a source of energy reacting to the column of fluid being dispensed is used to determine the time at which the dispense stopped and is used to control one or more stop-suck back valves on the dispenser (10).

8. The process of claim 1 wherein the shape is used to determine the time at which the dispense stopped and is used to control a spinner spindle of process equipment in communication with the dispenser (10).

9. The process of claim 1 wherein the shape is used to determine the time at which the dispense stopped and is used to control the timing of subsequent dispenses by the dispenser (10).

10. The system for determining the acceptability of a fluid dispense which comprises:
a dispenser (10) for dispensing a volume of fluid from a container containing said fluid,
one or more energy sources (16) for illuminating said volume of fluid prior to said volume of fluid contacting a substrate with energy,
one or more sensors (18) for detecting energy transmitted from said volume of fluid,
**characterized in that**
said one or more sensors (18) are adapted to identify a shape of said fluid dispense, and
means for comparing said shape with a previously identified shape to determine acceptability of said fluid dispense.

11. The system of claim 10 wherein the sensors for detecting energy transmitted from said volume of fluid and the means for comparing said shape are used to determine the time at which fluid flow from the dispenser (10) started and when it stopped.

12. The system of claim 10 wherein the one or more energy sources is a plurality of energy sources for illuminating and the one or more sensors is a plurality of sensors for detecting.

13. The system of claim 10 wherein the one or more energy sources are selected from the group consisting of thermal, acoustic and electromagnetic energy.

14. The system of claim 10 wherein the one or more energy sources is light.

15. The system of claim 10 wherein the sensors for detecting the energy collected from said energy source from said volume of fluid dispensed are used to determine the time at which fluid from the dispenser (10) started and when it stopped.

16. The system of claim 10 wherein the shape from the sensor indicates the end of fluid dispense and is used to control one or more stop suck-back valves and a spinner spindle of process equipment in communication with the dispenser (10), and the timing of subsequent dispenses by said dispenser (10).

17. The system of claim 10 wherein the shape from the sensor indicates the end of the fluid dispense is used to control the spinner spindle of the process equipment in communication with the dispenser (10).

18. The system of claim 10 wherein the shape from the sensor indicates the end of the fluid dispense and is used to control the timing of subsequent dispenses by the dispenser (10).

19. The process for coating a substrate comprising a determining of the acceptability of a fluid dispense using a process according to any of claims 1 to 9, said process comprising the steps of:
removing said substrate from said process equipment when the fluid dispense is determined to be unacceptable.

20. The process of claim 19 wherein said steps of illuminating and detecting are conducted at least twice.

21. The process of claim 19 wherein the one or more energy sources are selected from the group consisting of thermal, acoustic and electromagnetic energy.

22. The process of claim 19 wherein the one or more energy sources is light.

23. The process of claim 19 wherein the shape is used to determine the time at which the dispense stopped and is used to control a spinner spindle of said process equipment.

## Patentansprüche

1. Verfahren zum Bestimmen der Annehmbarkeit einer Fluidabgabe, mit folgenden Schritten:
Bereitstellen einer Abgabeeinrichtung (10) zum Abgeben eines Volumens eines Fluids, einschließlich Fluidabgabe von einem Behälter, der das Fluid enthält, und Abgeben des diskreten Fluidvolumens von dem Behälter durch die Abgabeeinrichtung (10),
Beleuchten des Fluidvolumens, bevor das Fluidvolumen ein Substrat kontaktiert, mit Energie von einem Emitter (16),
Erfassen der Energie, die von dem Fluidvolumen durchgelassen wird,
**gekennzeichnet durch**,
Identifizieren einer Form der Fluidabgabe, und
Vergleichen der Form mit einer zuvor identifizierten Standardform, um die Annehmbarkeit der Fluidabgabe zu bestimmen.

2. Verfahren gemäß Anspruch 1, bei dem das Erfassen von Energie, die von dem Fluidvolumen durchgelassen wird, verwendet wird, um die Zeit zu bestimmen, bei der die Fluidströmung von der Abgabeeinrichtung (10) startete und wann sie stoppte.

3. Verfahren gemäß Anspruch 1, bei dem die Schritte des Beleuchtens und Erfassens mindestens zweimal ausgeführt werden.

4. Verfahren gemäß Anspruch 1, bei dem die Schritte des Beleuchtens und Erfassens durch Messen der reflektierten Energie von der Oberfläche durchgeführt wird, auf die das Fluidvolumen abgegeben wird.

5. Verfahren gemäß Anspruch 1, bei dem die eine oder mehrere Energiequellen aus der aus thermischer, akustischer und elektromagnetischer Energie bestehenden Gruppe ausgewählt werden.

6. Verfahren gemäß Anspruch 1, bei der die eine oder mehrere Energiequellen Licht ist.

7. Verfahren gemäß Anspruch 1, bei dem der Empfang eines Signals von einer Energiequelle, die mit der abgegebenen Fluidsäule reagiert, verwendet wird, um die Zeit zu bestimmen, bei der die Abgabe stoppte, und verwendet wird, um ein oder mehrere Stopp-Ansaug-Rückschlagventile an der Abgabeeinrichtung (10) zu steuern.

8. Verfahren gemäß Anspruch 1, bei dem die Form verwendet wird, um die Zeit zu bestimmen, bei der die Abgabe stoppte, und verwendet wird, um eine Schleuderspindel eines Prozessgeräts in Verbindung mit der Abgabeeinrichtung (10) zu steuern.

9. Verfahren gemäß Anspruch 1, bei dem die Form verwendet wird, um die Zeit zu bestimmen, bei der die Abgabe stoppte, und verwendet wird, um das Timing anschließender Abgaben durch die Abgabeeinrichtung (10) zu steuern.

10. System zum Bestimmen der Annehmbarkeit einer Fluidabgabe, mit:
einer Abgabeeinrichtung (10) zum Abgeben eines Fluidvolumens aus einem Behälter, der das Fluid enthält,
einer oder mehreren Energiequellen (16) zum Beleuchten des Fluidvolumens mit Energie, bevor das Fluidvolumen ein Substrat kontaktiert,
einem oder mehrere Sensoren (18) zum Erfassen der von dem Fluidvolumen durchgelassen Energie,
**dadurch gekennzeichnet, dass**
der eine oder mehrere Sensoren (18) angepasst sind, um eine Form der Fluidabgabe zu identifizieren, und mit
einem Mittel zum Vergleichen der Form mit einer zuvor identifizierten Form, um die Annehmbarkeit der Fluidabgabe zu bestimmen.

11. System gemäß Anspruch 10, bei dem die Sensoren zum Erfassen der durch das Fluidvolumen durchgelassen Energie und das Mittel zum Vergleichen der Form verwendet werden, um die Zeit zu bestimmen, bei der die Fluidströmung von der Abgabeeinrichtung (10) startete und wann sie stoppte.

12. System gemäß Anspruch 10, bei dem die eine oder mehrere Energiequellen eine Mehrzahl von Energiequellen zum Beleuchten ist, und der eine oder mehrere Sensoren eine Mehrzahl von Sensoren zum Erfassen ist.

13. System gemäß Anspruch 10, bei dem die eine oder mehrere Energiequellen aus der aus thermischer, akustischer oder elektromagnetischer Energie bestehenden Gruppe ausgewählt werden.

14. System gemäß Anspruch 10, bei dem die eine oder mehrere Energiequellen Licht ist.

15. System gemäß Anspruch 10, bei dem die Sensoren zum Erfassen der Energie, die von der Energiequelle gesammelt wurde, aus dem abgegebenen Fluidvolumen verwendet werden, um die Zeit zu bestimmen, bei der Fluid von der Abgabeeinrichtung (10) startete und wann es stoppte.

16. System gemäß Anspruch 10, bei dem die Form von dem Sensor das Ende der Fluidabgabe angibt und verwendet wird, um ein oder mehrere Stopp-Ansaug-Rückschlagventile und eine Schleuderspindel des Prozessgeräts in Verbindung mit der Abgabeeinrichtung (10) und das Timing von anschließenden Abgaben durch die Abgabeeinrichtung (10) zu steuern.

17. System gemäß Anspruch 10, bei dem die Form von dem Sensor, die das Ende der Fluidabgabe angibt, verwendet wird, um die Schleuderspindel eines Prozessgeräts in Verbindung mit der Abgabeeinrichtung (10) zu steuern.

18. System gemäß Anspruch 10, bei dem die Form von dem Sensor das Ende der Fluidabgabe angibt und verwendet wird, um das Timing von anschließenden Abgaben durch die Abgabeeinrichtung (10) zu steuern.

19. Verfahren zum Beschichten eines Substrats, das ein Bestimmen der Annehmbarkeit einer Fluidabgabe mit einem Verfahren gemäß einem der Ansprüche 1 bis 9 umfasst, mit folgendem Schritt:
Entfernen des Substrats von einem Prozessgerät, wenn bestimmt wird, dass die Fluidabgabe unannehmbar ist.

20. Verfahren gemäß Anspruch 19, bei dem die Schritte des Beleuchtens und Erfassens mindestens zweimal ausgeführt werden.

21. Verfahren gemäß Anspruch 19, bei dem die eine oder mehrere Energiequellen aus der aus thermischer, akustischer und elektromagnetischer Energie bestehenden Gruppe ausgewählt werden.

22. Verfahren gemäß Anspruch 19, bei dem die eine oder mehrere Energiequellen Licht ist.

23. Verfahren gemäß Anspruch 19, bei dem die Form verwendet wird, um die Zeit zu bestimmen, bei der die Abgabe stoppte, und verwendet wird, um eine Schleuderspindel des Prozessgeräts zu steuern.

## Revendications

1. Procédé permettant de déterminer l'acceptabilité d'une distribution de fluide qui comprend les étapes consistant à :
fournir un distributeur (10) pour distribuer un volume de fluide comprenant ladite distribution de fluide depuis un récipient contenant ledit fluide et la distribution du volume de fluide discret depuis le récipient via le distributeur (10),
irradier ledit volume de fluide avant que ledit volume de fluide n'entre en contact avec un substrat avec de l'énergie provenant d'un émetteur (16),
détecter l'énergie transmise depuis ledit volume de fluide,
**caractérisé par**
l'identification d'une forme de ladite distribution de fluide et
la comparaison de ladite forme à une forme standard préalablement identifiée pour déterminer l'acceptabilité de ladite distribution de fluide.

2. Procédé selon la revendication 1 dans lequel la détection de l'énergie transmise depuis ledit volume de fluide est utilisée pour déterminer le moment où l'écoulement du fluide depuis le distributeur (10) a commencé et le moment où il s'est arrêté.

3. Procédé selon la revendication 1 dans lequel lesdites étapes consistant à irradier et à détecter sont réalisées au moins deux fois.

4. Procédé selon la revendication 1 dans lequel lesdites étapes consistant à irradier et à détecter sont réalisées en mesurant l'énergie reflétée depuis la surface sur laquelle ledit volume de fluide est distribué.

5. Procédé selon la revendication 1 dans lequel les une ou plusieurs sources d'énergie sont choisies dans le groupe constitué d'énergie thermique, sonore et électromagnétique.

6. Procédé selon la revendication 1 dans lequel les une ou plusieurs sources d'énergie sont la lumière.

7. Procédé selon la revendication dans lequel la réception d'un signal depuis une source d'énergie réagissant sur la colonne de fluide étant distribué est utilisée pour déterminer le moment où la distribution s'est arrêtée et est utilisée pour commander une ou plusieurs vannes anti-retour à stoppage d'aspiration sur le distributeur (10).

8. Procédé selon la revendication 1 dans lequel la forme est utilisée pour déterminer le moment où la distribution s'est arrêtée et est utilisée pour commander une tige de centrifugation d'un équipement de traitement en communication avec le distributeur (10).

9. Procédé selon la revendication 1 dans lequel la forme est utilisée pour déterminer le moment où la distribution s'est arrêtée et est utilisée pour commander la planification des distributions suivantes par le distributeur (10).

10. Système pour déterminer l'acceptabilité d'une distribution de fluide qui comprend :
un distributeur (10) pour distribuer un volume de fluide depuis un récipient contenant ledit fluide,
une ou plusieurs sources d'énergie (16) pour irradier avec de l'énergie ledit volume de fluide avant que ledit volume de fluide n'entre en contact avec un substrat,
un ou plusieurs détecteurs (18) pour détecter l'énergie transmise depuis ledit volume de fluide,
**caractérisé en ce que**
lesdits un ou plusieurs détecteurs (18) sont adaptés pour identifier une forme de ladite distribution de fluide, et
des moyens pour comparer ladite forme à une forme préalablement identifiée pour déterminer l'acceptabilité de ladite distribution de fluide.

11. Système selon la revendication 10 dans lequel les détecteurs pour détecter l'énergie transmise depuis ledit volume de fluide et les moyens pour comparer ladite forme sont utilisés pour déterminer le moment où l'écoulement de fluide depuis le distributeur (10) a commencé et le moment où il s'est arrêté.

12. Système selon la revendication 10 dans lequel les une ou plusieurs sources d'énergie sont une pluralité de sources d'énergie pour irradier et les un ou plusieurs détecteurs sont une pluralité de détecteurs pour détecter.

13. Système selon la revendication 10 dans lequel les une ou plusieurs sources d'énergie sont choisies dans le groupe constitué d'énergie thermique, sonore et électromagnétique.

14. Système selon la revendication 10 dans lequel les une ou plusieurs sources d'énergie sont la lumière.

15. Système selon la revendication 10 dans lequel les détecteurs pour détecter l'énergie collectée depuis ladite source d'énergie depuis ledit volume de fluide distribué sont utilisés pour déterminer le moment où l'écoulement de fluide depuis le distributeur (10) a commencé et le moment où il s'est arrêté.

16. Système selon la revendication 10 dans lequel la forme fournie par le détecteur indique la fin de la distribution de fluide et est utilisée pour commander une ou plusieurs vannes anti-retour à stoppage d'aspiration et une tige de centrifugation de l'équipement de traitement en communication avec le distributeur (10), et la planification des distributions suivantes par ledit distributeur (10).

17. Système selon la revendication 10 dans lequel la forme fournie par le détecteur indique la fin de la distribution de fluide et est utilisée pour commander la tige de centrifugation de l'équipement de traitement en communication avec le distributeur (10).

18. Système selon la revendication 10 dans lequel la forme fournie par le détecteur indique la fin de la distribution de fluide et est utilisée pour commander la planification des distributions suivantes par le distributeur (10).

19. Procédé pour revêtir un substrat comprenant une détermination de l'acceptabilité d'une distribution de fluide en utilisant un procédé selon l'une quelconque des revendications 1 à 9, ledit procédé comprenant l'étape consistant à :
éliminer ledit substrat dudit équipement de traitement lorsque la distribution de fluide est déterminée comme étant inacceptable.

20. Procédé selon la revendication 19 dans lequel lesdites étapes consistant à irradier et à détecter sont réalisées au moins deux fois.

21. Procédé selon la revendication 19 dans lequel les une ou plusieurs sources d'énergie sont choisies dans le groupe constitué d'énergie thermique, sonore et électromagnétique.

22. Procédé selon la revendication 19 dans lequel les une ou plusieurs sources d'énergie sont la lumière.

23. Procédé selon la revendication 19 dans lequel la forme est utilisée pour déterminer le moment où la distribution s'est arrêtée et est utilisée pour commander une tige de centrifugation dudit équipement de traitement.
